# FASCICULE DE BREVET EUROPEEN

(11) **EP 1 240 453 B1**
(45) Date de publication et mention de la délivrance du brevet: **02.06.2004**
(21) Numéro de dépôt: 00985370.6
(22) Date de dépôt: 30.11.2000
(51) Int. Cl.: F16L 11/12

(54) **CANALISATION POUR LE TRANSPORT DE FLUIDE DE REFROIDISSEMENT DANS UN MOTEUR A COMBUSTION INTERNE**
ROHRLEITUNG FÜR DEN TRANSPORT DER KÜHLFLÜSSIGKEIT EINES VERBRENNUNGSMOTORS
TUBE FOR TRANSPORTING A COOLANT IN AN INTERNAL COMBUSTION ENGINE

(30) Priorité: 09.12.1999 FR 9915534; 14.01.2000 FR 0000452
(43) Date de publication de la demande: 18.09.2002
(73) Titulaire: NOBEL PLASTIQUES, 92000 Nanterre (FR)
(72) Inventeur: GUIPPE, Jérôme, F-28630 Morancez (FR)
(74) Mandataire: Lavialle, Bruno
(86) Numéro de dépôt international: PCT/FR2000/003348
(87) Numéro de publication internationale: WO 2001/042701

(56) Documents cités:
- EP-A- 0 791 775
- US-A- 5 792 532

## Description

Le problème majeur à résoudre dans le domaine de la fabrication des tubes en matière synthétique destinés à transporter des fluides de véhicules automobiles (carburant, liquide de refroidissement, liquide de lave-glace, liquide de climatisation...) réside dans le compromis à trouver entre les performances à obtenir en regard des nombreuses exigences des constructeurs automobiles et le coût de la matière première et du procédé de fabrication de ce type de produit.

En effet, satisfaire les exigences des constructeurs est chose relativement aisée si l'on fait abstraction du prix du produit. Mais le produit ainsi obtenu n'a aucun marché parce que trop coûteux. Et dès que l'on recherche des produits à bas prix, les exigences ne sont plus satisfaites.

L'invention concerne une structure qui est un compromis acceptable entre les exigences contradictoires en matière de performances et de coût.

A cet effet donc, l'invention a pour objet une canalisation pour le transfert d'un liquide de refroidissement d'un moteur de véhicule automobile qui est formé par une couche de matière thermoplastique élastomère et une couche de matière thermoplastique formée par un alliage de polyamide et de polypropylène.

L'intérêt de l'emploi d'une matière thermoplastique élastomère (TPE) réside dans l'obtention de plusieurs avantages propres au caractère caoutchoutique de cette matière. C'est ainsi qu'on peut obtenir une canalisation flexible qui permet une opération de thermoformage plus aisée, le thermoformage s'appliquant à la matière thermoplastique du type mélange polyamide polypropylène. En outre, le TPE constitue un amortisseur intégré à la canalisation qui permet de réduire les émissions sonores nées de cette canalisation, notamment lorsque celles-ci ont pour origine des variations brutales de pression du fluide en son sein.

L'utilisation conjointe d'une part d'un TPE et d'autre part d'un alliage polypropylène-polyamide présente l'avantage de pouvoir supprimer toute couche intermédiaire de liaison entre ces deux produits car ceux-ci sont tout à fait compatibles entre eux. Enfin, le thermoplastique élastomère TPE ne demande aucune opération de post-vulcanisation. Ces deux dernières caractéristiques sont un facteur de réduction des coûts de fabrication de la canalisation selon l'invention.

Le choix d'un alliage polypropylène-polyamide comme matériau thermoplastique rigide mais néanmoins thermoformable, permet, à l'égard d'un polypropylène ou d'un polyéthylène bon marché, d'améliorer la tenue en température du matériau. En effet, la présence de polyamide dans le polypropylène est un facteur d'augmentation de tenue thermique tout en conservant partiellement l'avantage économique du polypropylène sur le polyamide. La présence de polypropylène allié à du polyamide est un facteur d'augmentation de la résistance à l'hydrolyse dont on sait qu'elle est insuffisante pour le polyamide, tout en rendant le produit final meilleur marché que le polyamide seul.

La canalisation selon l'invention peut se présenter sous deux formes selon que le matériau thermoplastique élastomère forme la couche interne ou la couche externe de celle-ci.

Lorsque le matériau élastomère forme la couche interne de la canalisation, celle-ci présente la propriété d'être facilement connectable à des embouts rigides pourvus de reliefs extérieurs tels que des tétines ou des queues de sapin, par simple emmanchement, la déformabilité du TPE permettant de réaliser cette connexion sans avoir à développer d'efforts d'emmanchement importants et de préserver à cette connexion une bonne étanchéité. Dans cette configuration, la matière thermoplastique externe permet d'adjoindre à cette canalisation toute sorte d'éléments utiles à sa fixation tels que des pattes, des collerettes, des colliers, ... par simple soudure à vibrations ou par ultrasons.

En variante, il peut être prévu de recouvrir extérieurement la couche d'alliage polypropylène-polyamide d'une couche de protection de préférence en polyamide modifié choc (de type PA6 en particulier) afin de limiter le risque d'une détérioration de la canalisation du fait de chocs.

Dans la réalisation où la matière thermoplastique élastomère est située en couche externe, elle constitue une couche de protection de la couche interne en alliage polypropylène-polyamide, alliage relativement fragile, et pouvant se fissurer sous l'effet de chocs extérieurs. Cette structure permet d'équiper chacune des extrémités d'une telle canalisation d'un embout rigide par soudure ou tout autre liaison de cet embout à la couche interne en alliage de polypropylène et de polyamide, l'autre extrémité de l'embout constituant un élément rigide propre par exemple à coopérer avec des moyens d'encliquetage de canalisation tels que ceux-ci se développent dans le domaine automobile. Enfin, une canalisation qui possède une couche élastomérique à l'extérieur présente l'avantage d'offrir au toucher une certaine douceur qui fait partie des requêtes à satisfaire établies par les constructeurs automobiles.

A titre indicatif, on mentionnera qu'il existe un alliage polypropylène-polyamide appelé sur le marché ORGALLOY provenant du fournisseur ATO alors que la matière thermoplastique élastomère qui est une matrice de polypropylène avec des nodules d'EPDM est présente sur le marché sous au moins les marques SANTOPRENE ou SARLINK.

## Revendications

1. Canalisation pour le transfert d'un liquide de refroidissement d'un moteur de véhicule automobile, **caractérisé en ce qu'**elle est formée par une couche de matière thermoplastique élastomère (TPE) et une couche de matière thermoplastique formée par un alliage de polyamide et de polypropylène.

2. Canalisation selon la revendication 1, **caractérisée en ce que** la matière élastomère est en couche interne, l'alliage polypropylène polyamide formant une couche recouvrant la matière élastomère.

3. Canalisation selon la revendication 2, **caractérisée en ce qu'**une couche de protection recouvre extérieurement la couche d'alliage polypropylène-polyamide.

4. Canalisation selon la revendication 3, **caractérisée en ce que** la couche de protection est en polyamide modifié choc.

5. Canalisation selon la revendication 1, **caractérisée en ce que** la matière élastomère est en couche externe et **en ce que** l'alliage polypropylène polyamide est en couche interne.

## Patentansprüche

1. Rohrleitung für den Transport einer Kühlflüssigkeit eines Kraftfahrzeugmotors, **dadurch gekennzeichnet, dass** sie aus einer Schicht aus thermoplastischem Elastomer (TPE) und einer Schicht aus Thermoplast gebildet ist, der aus einer Legierung aus Polyamid und Polypropylen gebildet ist.

2. Rohrleitung nach Anspruch 1, **dadurch gekennzeichnet, dass** das Elastomer eine Innenschicht bildet, wobei die Polyproylen-Polyamid-Legierung eine Schicht bildet, die das Elastomer überdeckt.

3. Rohrleitung nach Anspruch 2, **dadurch gekennzeichnet, dass** eine Schutzschicht die Polypropylen-Polyamid-Legierungsschicht außen überdeckt.

4. Rohrleitung nach Anspruch 3, **dadurch gekennzeichnet, dass** die Schutzschicht aus schlagzäh modifiziertem Polyamid ist.

5. Rohrleitung nach Anspruch 1, **dadurch gekennzeichnet, dass** das Elastomer eine Außenschicht bildet und dass die Polypropylen-Polyamid-Legierung eine Innenschicht bildet.

## Claims

1. A pipe for transferring a coolant in a motor vehicle engine, the pipe being **characterized in that** it is formed by a layer of thermoplastic elastomer material (TPE) and a layer of thermoplastic material formed by a polyamide and polypropylene alloy.

2. A pipe according to claim 1, **characterized in that** the elastomer material is an inner layer, the polyamide/polypropylene alloy forming a layer covering the elastomer material.

3. A pipe according to claim 2, **characterized in that** a protective layer covers the outside of the polyamide/polypropylene alloy.

4. A pipe according to claim 3, **characterized in that** the protective layer is made of impact modified polyamide.

5. A pipe according to claim 1, **characterized in that** the elastomer material is an outer layer, and **in that** the polyamide/polypropylene alloy is an inner layer.
